Europäisches Patentamt

European Patent Office

Office européen des brevets

(11) Veröffentlichungsnummer: **0 665 251 A2**

# (12) EUROPÄISCHE PATENTANMELDUNG

(21) Anmeldenummer: **94120368.9**

(51) Int. Cl.⁶: **C08G 18/48**, C08K 5/52

(22) Anmeldetag: **22.12.94**

(30) Priorität: **29.01.94 DE 4402691**

(43) Veröffentlichungstag der Anmeldung:
**02.08.95 Patentblatt 95/31**

(84) Benannte Vertragsstaaten:
**AT BE CH DE DK ES FR GB IT LI NL SE**

(71) Anmelder: **HOECHST AKTIENGESELLSCHAFT**

**D-65926 Frankfurt (DE)**

(72) Erfinder: **Staendeke, Horst, Dr.**
**Alte Honrather Strasse 22**
**D-53797 Lohmar (DE)**

(54) **Halogenfreier, flammwidriger Polyurethanhartschaum.**

(57) Der halogenfreie, flammwidrige Polyurethanhartschaum der Erfindung enthält als Flammschutzsystem eine Kombination von Ammoniumpolyphosphat und Phosphorsäureestern oder Phosphonsäureestern im Gewichtsverhältnis von 2 : 1 bis 1 : 2.

EP 0 665 251 A2

Die Erfindung betrifft einen halogenfreien, flammwidrigen Polyurethanhartschaum.

Verbote und Verwendungsbeschränkungen für vollhalogenierte Fluorchlorkohlenwasserstoffe (FCKW) , beispielsweise für Trichlorfluormethan (FCKW 11), als Treibmittel bei der Herstellung von Polyurethan (PUR)-Hartschaum machten es erforderlich, auch brennbare organische Verbindungen als FCKW-Ersatzstoffe einzusetzen.

Die Verwendung von Pentan als Treibmittel ist bereits aus der US-PS 3 072 582 bekannt; weitere Informationen über die Verwendung von Pentan als Treibmittel für PUR-Hartschäume finden sich bei G. Heilig, Pentan- eine FCKW-Alternative für Polyurethan-Hartschaumstoffe, Kunststoffe 81, (1991), Seiten 622 bis 625 und bei M. Mann et al. , Hartschaumstoffe mit alternativen Blähmitteln, Plastverarbeiter 43, (1992) 9, Seiten 90 bis 96.

Die Verwendung brennbarer Treibmittel bei der Herstellung von PUR-Hartschäumen führte erwartungsgemäß zu Problemen bei der flammwidrigen Ausrüstung, weshalb die Flammschutzsysteme den veränderten Bedingungen angepaßt werden mußten.

Dabei wurde berücksichtigt, daß durch den Wegfall der halogenhaltigen Treibmittel nun die Chance gegeben war, bei Verwendung halogenfreier Flammschutzmittel PUR-Hartschäume herzustellen, aus denen im Brandfall keine korrosiven Halogenwasserstoffe entstehen können, die häufig Ursache für Sekundärschäden sind, welche die eigentlichen Brandschadenskosten um ein Vielfaches übersteigen.

In der EP-A1-0 394 769 wird beschrieben, daß Ammoniumpolyphosphat und Methanphosphonsäuredimethylester (DMMP) als Flammschutzmittel für pentangetriebene PUR-Hartschäume eingesetzt werden können, wobei in allen Fällen (Beispiele 1, 4 und 5) mit hohen APP/DMMP-Gew.-Verhältnissen (5,4 :1 bis 4 : 1) gearbeitet wird.

Anlagen für die Herstellung von PUR-Blockschaum bzw. -Laminatschaum (sogen. Doppeltransportbandanlagen) sind üblicherweise nicht für den Einsatz fester Flammschutzmittel ausgelegt.

Dieses Problem konnte erfindungsgemäß durch die Entwicklung pumpfähiger, sedimentationsstabiler Ammoniumpolyphosphat-Suspensionen in geeigneten, ausreichend niedrigviskosen Phosphorsäure- oder Phosphonsäureestern gelöst werden, weil überraschenderweise gefunden wurde, daß APP/Phosphorsäureester bzw. Phosphonsäureester-Suspensionen im Gewichtsverhältnis von etwa 2 : 1 bis 1 : 2 sehr wirksame Flammschutzmittel für PUR-Hartschäume darstellen.

Dies war deshalb überraschend und nicht vorhersehbar, weil die beiden Einzelkomponenten bis zu relativ hohen Einsatzkonzentrationen nicht in der Lage sind, die geforderten Flammschutznormen zu erfüllen. Erst in der Kombination beider Flammschutzmittel wird eine beträchtliche Wirkungsverstärkung (Synergismus) erreicht, die das Erfüllen der Flammschutznormen mit wirtschaftlich vertretbaren Einsatzkonzentrationen gestattet.

Im einzelnen ist der halogenfreie, flammwidrige PUR-Hartschaum der Erfindung dadurch gekennzeichnet, daß er als Flammschutzsystem eine Kombination von Ammoniumpolyphosphat und Phosphorsäureestern oder Phosphonsäureestern im Gewichtsverhältnis von 2 : 1 bis 1 : 2 enthält.

Der PUR-Hartschaum der Erfindung kann darüber hinaus bevorzugt und wahlweise dadurch gekennzeichnet sein, daß

a) bei seiner Herstellung das Flammschutzsystem in Form einer Paste zugesetzt wurde, die mit hochdisperser Kieselsäure, modifizierten Rizinusölderivaten, organisch modifizierten Schichtsilikaten oder deren Mischungen thixotrop eingestellt war;

b) man als Phosphorsäureester einen Orthophosphorsäuretriarylester oder -tri(alkylaryl)ester einsetzt;

c) man als Phosphonsäureester einen Alkanphosphonsäureester der allgemeinen Formel

R-P(O)(OR$_1$)(OR$_2$)

einsetzt, worin

R, R$_1$, R$_2$ für Alkylgruppen mit 1 - 4 C-Atomen stehen;

d) er 20 - 70 Gew.-Teile, vorzugsweise 20 - 50 Gew.-Teile, des Flammschutzsystems je 100 Gew.-Teile des bei seiner Herstellung eingesetzten Polyols enthält.

Beispiele

Den Versuchen zur Herstellung von halogenfreien, flammwidrigen Polyurethan-Hartschäumen lag folgende Rezeptur zugrunde (Gew.-Teile):
100 Teile Polyol
®Caradol LP 585-01, ein aminmodifiziertes Polyetherpolyol auf Basis von Sucrose der Deutsche Shell

2

Chemie GmbH, Eschborn, mit einer Hydroxylzahl von 585 mg KOH/g und einer Dichte von 1,10 g/ml bei 20 °C.

variable Teile Flammschutzmittel

2,5 Teile Katalysator (Dimethylcyclohexylamin)

2,0 Teile Siliconstabilisator

®DC 193, ein Siliconglykol-Copolymer der Dow Corning GmbH, Wiesbaden, mit einer Dichte von 1,07 g/ml

3,0 Teile Wasser

variable Teile Treibmittel

variable Teile Polyisocyanat (NCO-Index 110)

®Caradate 30, ein Diphenylmethan-4,4'-diisocyanat (Isomerengemisch) der Deutsche Shell Chemie GmbH, Eschborn, mit einer Viskosität von ca. 200 mPa.s und einer Dichte von 1,23 g/ml.

Bei den nachfolgenden Beispielen wurden folgende Flammschutzmittel eingesetzt:

- ®Hostaflam AP 422, ein langkettiges, wenig wasserlösliches Ammoniumpolyphosphat der Hoechst AG, Frankfurt, mit einer Dichte von 1,9 g/ml, einem Phosphorgehalt von 31,5 Gew.-% und einem Stickstoffgehalt von 14,5 Gew.-%

- ®Hostaflam OP 910, ein halogenfreies Flammschutzmittel der Hoechst AG, Frankfurt, auf Basis oligomerer Phosphonsäureester mit einem Phosphorgehalt von 21 Gew.-% und einer Dichte von 1,28 g/ml bei 25 °C.

- ®Reoflam DMMP, ein Methanphosphonsäuredimethylester der FMC Chemical Products, Fankfurt, mit einem Phosphorgehalt von 25 Gew.-% und einer Dichte von 1,17 g/ml bei 25 °C.

- ®Disflamoll TP, ein Triphenylphosphat der Bayer AG, Leverkusen, mit einer Dichte von 1,21 g/ml bei 50 °C und einem Schmelzbereich von 48 - 50 °C.

- ® Disflamoll DPK, ein Diphenylkresylphosphat der Bayer AG, Leverkusen, mit einer Dichte von ca. 1,2 g/ml bei 20 °C und einem Siedebereich von 225 - 235 °C bei 5 mbar.

Als Treibmittel kam zum Einsatz:

- n-Pentan mit einem Siedepunkt von 36 °C und einer Dichte von 0,63 g/ml.

Zur Beurteilung der Flammwidrigkeit wurden Brandtests nach DIN 4102, Teil 1, mit jeweils 5 Proben in den Abmessungen 90 x 190 mm (Kantenbeflammung) durchgeführt.

Für Polyurethan-Hartschäume, die in Deutschland als Baustoffe (Dämmstoffe) eingesetzt werden sollen, ist die Einstufung in die Klasse DIN 4102-B2 verbindlich vorgeschrieben.

Die Versuche mit Ammoniumpolyphosphat (Beispiele 1 bis 3) zeigen, daß bei Einsatzmengen bis zu 40 Teilen / 100 Teile Polyol keine Einstufung in die Klasse DIN 4102-B2 erreicht werden konnte; entsprechendes gilt für DMMP (Beispiele 4 bis 6) bei Einsatzmengen bis zu 60 Teilen / 100 Teile Polyol.

Ein deutlicher Synergismus wurde erkennbar, wenn Kombinationen beider Flammschutzmittel zum Einsatz kamen. Selbst schon bei einer Gesamt-Flammschutzmittelkonzentration von 25 Teilen / 100 Teile Polyol (Beispiel 7) wurde eine Einstufung in die Klasse DIN 4102-82 erreicht.

Ähnliches wurde bei den übrigen getesteten phosphororganischen Flammschutzmitteln beobachtet, die - allein geprüft - bis zu Einsatzmengen von 60 Teilen / 100 Teile Polyol nicht effektiv sind. Erst in der Kombination mit Ammoniumpolyphosphat entfaltet sich ein Synergismus, der bei vergleichsweise niedrigen Einsatzmengen (40 php) eine Einstufung in die Klasse DIN 4102-82 ermöglicht.

T a b e l l e :

| Beispiel Nr. | Flammschutzmittel | | | Treibmittel: n-Pentan | Rohdichte: | DIN-4102-Test | |
|---|---|---|---|---|---|---|---|
| | Typ | Menge (php)[1] | Gesamt (php) | Menge (php) | (kg/m³) | Flammenhöhe (mm)[2] | Klasse |
| 1(Vergleich) | Hostaflam AP 422 | 20 | 20 | 12 | 32 | >150 | B3 |
| 2(Vergleich) | " | 30 | 30 | 12 | 33 | >150 | B3 |
| 3(Vergleich) | " | 40 | 40 | 12 | 34 | >150 | B3 |
| 4(Vergleich) | Reoflam DMMP | 20 | 20 | 10 | 31 | >150 | B3 |
| 5(Vergleich) | " | 40 | 40 | 11 | 32 | >150 | B3 |
| 6(Vergleich) | " | 60 | 60 | 11 | 32 | >150 | B3 |
| 7(Erfindung) | Hostaflam AP 422 Reoflam DMMP | 15 10 | 25 | 5 | 32 | 145 | B2 |
| 8(Erfindung) | Hostaflam AP 422 Reoflam DMMP | 20 10 | 30 | 6 | 31 | 130 | B2 |
| 9(Erfindung) | Hostaflam AP 422 Reoflam DMMP | 15 15 | 30 | 5 | 32 | 140 | B2 |
| 10(Erfindung) | Hostaflam AP 422 Reoflam DMMP | 10 20 | 30 | 5 | 31 | 145 | B2 |
| 11(Vergleich) | Hostaflam OP 910 | 20 | 20 | 12 | 32 | >150 | B3 |
| 12(Vergleich) | " | 40 | 40 | 13 | 35 | >150 | B3 |
| 13(Vergleich) | " | 60 | 60 | 14 | 31 | >150 | B3 |

[1] php = parts per 100 parts of polyol (Gew.-Teile/100 Gew.-Teile PolyoI)

[2] Mittelwert aus 5 Einzelmessungen

T a b e l l e :   (Fortsetzung)

| Beispiel Nr. | Flammschutzmittel Typ | Menge (php)[1] | Gesamt (php) | Treibmittel: n-Pentan Menge (php) | Rohdichte: (kg/m³) | DIN-4102-Test: Flammenhöhe (mm)[2] | Klasse |
|---|---|---|---|---|---|---|---|
| 14(Erfindung) | Hostaflam AP 422 Hostaflam OP 910 | 25 15 | 40 | 13 | 30 | 105 | B2 |
| 15(Vergleich) | Disflamoll TP | 20 | 20 | 12 | 31 | >150 | B3 |
| 16(Vergleich) | " | 40 | 40 | 12 | 32 | >150 | B3 |
| 17(Vergleich) | " | 60 | 60 | 12 | 34 | >150 | B3 |
| 18(Erfindung) | Hostaflam AP 422 Disflamoll TP | 20 20 | 40 | 12 | 33 | 140 | B2 |
| 19(Vergleich) | Disflamoll DPK | 20 | 20 | 12 | 30 | >150 | B3 |
| 20(Vergleich) | " | 40 | 40 | 12 | 32 | >150 | B3 |
| 21(Vergleich) | " | 60 | 60 | 12 | 33 | >150 | B3 |
| 22(Erfindung) | Hostaflam AP 422 Disflamoll DPK | 20 20 | 40 | 12 | 33 | 140 | B2 |

1) php = parts per 100 parts of polyol (Gew.-Teile/100 Gew.-Teile Polyol)

2) Mittelwert aus 5 Einzelmessungen

## Patentansprüche

1. Halogenfreier, flammwidriger Polyurethanhartschaum, dadurch gekennzeichnet, daß er als Flammschutzsystem eine Kombination von Ammoniumpolyphosphat und Phosphorsäureestern oder

5

Phosphonsäureestern im Gewichtsverhältnis von 2 : 1 bis 1 : 2 enthält.

2. Polyurethanhartschaum nach Anspruch 1, dadurch gekennzeichnet, daß bei seiner Herstellung das Flammschutzsystem in Form einer Paste zugesetzt wurde, die mit hochdisperser Kieselsäure, modifizierten Rizinusölderivaten, organisch modifizierten Schichtsilikaten oder deren Mischungen thixotrop eingestellt war.

3. Polyurethanhartschaum nach Anspruch 1 oder 2, dadurch gekennzeichnet, daß man als Phosphorsäureester einen Orthophosphorsäuretriarylester oder -tri(alkylaryl)ester einsetzt.

4. Polyurethanhartschaum nach Anspruch 1 oder 2, dadurch gekennzeichnet, daß man als Phosphonsäureester einen Alkanphosphonsäureester der allgemeinen Formel $R-P(O)(OR_1)(OR_2)$ einsetzt, worin R, $R_1$, $R_2$ für Alkylgruppen mit 1 bis 4 C-Atomen stehen.

5. Polyurethanhartschaum nach einem der Ansprüche 1 bis 4, dadurch gekennzeichnet, daß er 20 bis 70 Gew.-Teile, vorzugsweise 20 bis 50 Gew.-Teile, des Flammschutzsystems, je 100 Gew.-Teile des bei seiner Herstellung eingesetzten Polyols enthält.